# FASCICULE DE BREVET EUROPEEN

(11) **EP 0 930 732 B1**
(45) Date de publication et mention de la délivrance du brevet: **28.02.2001**
(21) Numéro de dépôt: 99400080.0
(22) Date de dépôt: 14.01.1999
(51) Int. Cl.: H04B 10/18, H04B 10/17, H01S 3/30

(54) **Elimination de la limitation en puissance optique due à l'effet raman dans les liaisons par fibre optique**
Eliminierung der optischen Leistungsbegrenzung verursacht durch Ramaneffekt in faseroptischen Verbindungen
Elimination of optical power limitation due to Raman effect in optical fibre links

(30) Priorité: 15.01.1998 FR 9800350
(43) Date de publication de la demande: 21.07.1999
(73) Titulaire: ALCATEL, 75008 Paris (FR)
(72) Inventeur: Blondel, Jean-Pierre, 78530 Buc (FR); Brandon, Eric, 92340 Bourg la Reine (FR); Marcerou, Jean- François, 91100 Corbeil-Essonnes (FR); Marcerou, Mireille, 91100 Corbeil-Essonnes (FR)
(74) Mandataire: Lamoureux, Bernard

(56) Documents cités:
- GRUBB S G ET AL: "FIBER RAMAN LASERS EMIT AT MANY WAVELENGTHS" LASER FOCUS WORLD, vol. 32, no. 2, 1 février 1996, page 127, 130/131, 134 XP000554804
- FOLEY B ET AL: "GAIN SATURATION IN FIBER RAMAN AMPLIFIERS DUE TO STIMULATED BRILLOUIN SCATTERING" JOURNAL OF LIGHTWAVE TECHNOLOGY, vol. 7, no. 12, 1 décembre 1989, pages 2024-2032, XP000103648
- HANSEN P B ET AL: "UNREPEATERED WDM TRANSMISSION EXPERIMENT WITH 8 CHANNELS OF 10 GB/SOVER 352 KM" IEEE PHOTONICS TECHNOLOGY LETTERS, vol. 8, no. 8, 1 août 1996, pages 1082-1084, XP000621661

## Description

La présente invention a pour objet une liaison par fibre optique. L'invention concerne aussi un système de transmission comprenant une telle liaison. Enfin, l'invention concerne un procédé pour repousser la limitation en puissance optique due à l'effet Raman dans une liaison par fibre optique. L'invention s'applique tout particulièrement aux liaisons dites "sans répéteurs". Ces liaisons sont définies par le fait qu'elles n'utilisent des éléments électriquement actifs que dans les terminaux d'extrémité.

Les liaisons par fibre optique sans répéteur présentent la particularité de nécessiter, pour atteindre de grandes distances, l'injection dans la fibre optique de très fortes puissances optiques. Deux types d'ondes optiques sont injectés dans la fibre. Le premier type est l'onde de signal, à environ 1550 nm, qui est modulée et porte l'information à transmettre. Le deuxième type d'onde optique est l'onde optique dite de pompe, dans la plage de longueur d'onde 1400-1500 nm, qui est une puissance continue injectée dans la fibre optique, de façon à amplifier le signal.

De nombreuses variantes existent pour l'utilisation de cette onde de pompe. L'onde de pompe peut être émise depuis le terminal d'émission ou depuis le terminal de réception. Le schéma le plus courant consiste à placer un morceau de fibre dopée dans la liaison à quelques dizaines de km du terminal d'où est émise l'onde de pompe. Cette fibre dopée est activée par l'onde optique de pompe et amplifie le signal. L'onde de pompe peut être injectée dans la même fibre optique que celle qui transporte le signal ou être injectée dans une fibre optique séparée. Les deux techniques peuvent être combinées. Si les ondes de signal et de pompe sont sur la même fibre, l'onde de pompe amplifie le signal par effet Raman, ce qui est, jusqu'à un certain niveau de puissance de pompe, bénéfique.

Il est recherché d'utiliser de très fortes puissances de signal et de pompe (de l'ordre de grandeur du Watt) afin de permettre l'augmentation de la portée de la liaison. Cependant, la puissance de signal et la puissance de pompe qui peuvent être injectées sont limitées par plusieurs effets non-linéaires, notamment l'effet Brillouin, l'effet Kerr et l'effet Raman. Ces effets sont décrits dans l'ouvrage de G.P. Agrawal, Nonlinear Fibre Optics, Academic Press 1980.

La publication The performance limits of unrepeatered systems, A. Hadjifotiou, Suboptic '93, 29 March-2 April 1993, Versailles, France évoque la limitation par divers effets non linéaires; pour ce qui est de l'effet Raman (en anglais Stimulated Raman Scattering), cette publication propose simplement une valeur de seuil pour la puissance à l'émission, correspondant à la valeur de puissance à l'émission pour laquelle la puissance décalée en fréquence par effet Raman (puissance de Stokes) est égale à la puissance du signal en sortie de fibre.

La publication Rayleigh scattering limitations in distributed Raman preamplifiers, P.B. Hansen et al, OFC'97 technical digest, paper FA2, Dallas, February 1997 décrit un système de transmission utilisant des préamplificateurs Raman. Cette publication calcule la limitation imposée par la diffusion Rayleigh dans les préamplificateurs Raman.

L'invention repose sur la constatation nouvelle que le phénomène limitant l'injection de fortes puissances optiques est l'effet Raman. En effet, pour de fortes puissances de signal ou de pompe injectées, l'effet Raman crée un gain très important dans la fibre, qui combiné avec les réflexions de type Rayleigh (réflexions intrinsèques de la fibre), provoque des oscillations et des instabilités de puissance qui empêchent la transmission. De plus, ce phénomène créée du bruit qui est amplifié au détriment du signal de la pompe à transmettre. Ce phénomène est évoqué dans la publication de A. Hadjifotiou mentionnée plus haut, parmi d'autres limitations sur les performances de la liaison; mais cette publication ne propose qu'une modélisation de la limite de puissance correspondante, ne précise pas qu'il s'agit là de l'effet limitant, et ne décrit aucune solution à la limitation.

L'invention propose une solution au problème de la limitation de la puissance optique injectée dans les liaisons par fibres optiques; en particulier, elle permet d'allonger les liaisons sans répéteurs, en rendant possible l'injection de puissances plus importantes. Par rapport à des longueurs de liaisons commerciales actuellement possibles de 400 km, ou de liaisons de laboratoires de 500 km, telles que celles décrites dans l'article de S. S. Sian et autres. 511 km at 2.5 Gbit/s and 531 km at 622 Mbit/s - Unrepeated Transmission with Remote pumped amplifiers, Forward Error Correction and Dispersion Compensation, l'invention permet d'allonger la longueur de la liaison de plus de 80 km. En termes de puissance, les puissances de pompe injectées actuellement sont de l'ordre de 1,3 W, voir par exemple l'article de P. B. Hansen et autres, Unrepeated WDM Transmission Experiment with 8 Channels of 10 Gb/s over 352 km, IEEE Photonics Technology Letters, vol. 8 no 8, Août 1996; l'invention permet d'injecter des puissances de pompe allant jusqu'à 10 W.

Plus précisément, l'invention propose une liaison par fibre optique, caractérisée par des moyens d'atténuation dans la région de longueur d'onde où le signal émis crée du gain Raman.

Avantageusement, les moyens d'atténuation sont bidirectionnels.

De préférence, ils atténuent en outre les réflexions Rayleigh dans la région de longueur d'onde où le signal émis créée du gain Raman.

Dans un mode de réalisation, les moyens d'atténuation induisent dans la liaison des réflexions à un niveau inférieur à -20 dB, de préférence inférieur à -40 dB à la longueur d'onde de maximum de gain Raman.

Dans un autre mode de réalisation, les moyens d'atténuation atténuent d'au moins 10 dB à la longueur d'onde de maximum de gain Roman.

Avantageusement, les moyens d'atténuation atténuent dans la région de longueur d'onde du signal émis à un niveau inférieur à 1 dB.

Les moyens d'atténuation peuvent comprendre un ou plusieurs des éléments suivants: des sections de fibre optique dopées avec des matériaux absorbant davantage dans la région de longueur d'onde où le signal émis créée du gain Raman que dans la région de la longueur d'onde à transmettre; des filtres atténuant dans la région de longueur d'onde où le signal émis créée du gain Raman; des isolateurs optiques.

Dans ce cas, ces matériaux comprennent par exemple des terres rares telles le terbium ou le dysprosium. La concentration en terre rare dans la section de fibre est avantageusement supérieure à 0,01 ppm.

Dans un mode de réalisation, l'atténuation par unité de longueur dans les dites sections de fibre à la longueur d'onde où le signal émis créée du gain Raman est au moins deux fois supérieure à l'atténuation à la longueur d'onde du signal émis.

On peut aussi prévoir des moyens d'atténuation localisé en au moins un point de la liaison, la longueur totale des moyens d'atténuation étant inférieure à 10% de la longueur totale de la liaison.

En outre, on peut prévoir des moyens d'atténuation distribués dans la liaison, la longueur totale des moyens d'atténuation étant comprise entre 10 et 100% de la longueur totale de la liaison.

Dans un mode de réalisation. les moyens d'atténuation dans la région de gain Raman sont placés à des endroits de la liaison tels qu'un tout point de la liaison, la valeur de gain Raman cumulé depuis l'extrémité de la liaison ou depuis d'autres moyens d'atténuation est inférieure à une valeur limite.

Cette valeur limite est de préférence fonction des réflexions dans la liaison.

Dans un autre mode de réalisation, des moyens d'atténuation dans la région de gain Raman sont utilisés pour transmettre de fortes puissances d'onde de signal de transmission dans la gamme de longueur d'onde 1520-1580 nm ou d'onde de pompe dans la gamme de longueur d'onde 1400-1500 nm.

On peut prévoir une pluralité de moyens d'atténuations.

L'invention concerne aussi un système de transmission, comprenant au moins une telle liaison.

L'invention concerne enfin un procédé de transmission de signal optique à forte puissance dans une liaison par fibre optique, caractérisé par au moins une étape d'atténuation dans la région de longueur d'onde où le signal émis crée du gain Raman

Dans un mode de réalisation, l'étape d'atténuation comprend une atténuation dans les deux sens de propagation sur la liaison.

On peut en outre prévoir une étape d'atténuation des réflexions Rayleigh dans la région de longueur d'onde où le signal émis créée du gain Raman.

Avantageusement, l'étape d'atténuation comprend une atténuation d'au moins 10 dB à la longueur d'onde de maximum de gain Raman.

De préférence, l'étape d'atténuation induit dans la région de longueur d'onde du signal émis une atténuation d'un niveau inférieur à 1 dB.

Dans un mode de réalisation, l'étape d'atténuation comprend une ou plusieurs des étapes suivants: propagation à travers des sections de fibre optique dopées avec des matériaux absorbant davantage dans la région de longueur d'onde où le signal émis créée du gain Raman que dans la région de la longueur d'onde à transmettre; filtrage à l'aide de filtres atténuant dans la région de longueur d'onde où le signal émis créée du gain Raman; réflexion par des isolateurs optiques.

Dans ce cas. ces matériaux peuvent comprendre des terres rares telles le terbium ou le dysprosium. La concentration en terre rare dans la section de fibre est alors de préférence supérieure à 0,01 ppm.

Dans un mode de réalisation, l'atténuation par unité de longueur dans les dites sections de fibre à la longueur d'onde où le signal émis créée du gain Raman est au moins deux fois supérieure à l'atténuation à la longueur d'onde du signal émis.

On peut prévoir que l'étape d'atténuation s'effectue de manière localisée en au moins un point de la liaison, ou encore de manière distribuée le long de la liaison, sur une longueur comprise entre 10 et 100% de la longueur totale de la liaison.

Avantageusement, l'étape d'atténuation est mise en oeuvre dans la liaison de sorte qu'en tout point de la liaison, la valeur de gain Raman cumulé est inférieure à une valeur limite. Cette valeur limite est de préférence fonction des réflexions dans la liaison.

Avantageusement, on prévoit une pluralité d'étapes d'atténuations.

D'autres caractéristiques et avantages de l'invention apparaîtront à la lecture de la description qui suit de différents modes de réalisation de l'invention, donnée à titre d'exemple uniquement, et en référence aux dessins qui montrent:
- figure 1, la forme spectrale approximée du bruit et du coefficient de gain Raman correspondant à une onde émise à la longueur d'onde λ1 dans la région de 1500 nm;
- figure 2, une liaison classique, avec les puissances des différents signaux;
- figure 3, une liaison pourvue de moyens d'atténuation selon l'invention;
- figure 4, une liaison selon l'invention, avec des moyens d'atténuation localisés disposés sur la fibre de pompage;
- figure 5, une liaison selon l'invention, avec des moyens d'atténuation localisés disposés sur la fibre de ligne;
- figure 6, une liaison selon l'invention. avec des moyens d'atténuation distribués disposés sur la fibre de ligne.

On considère dans la suite de la présente demande des exemples de modes de réalisation de l'invention, pour divers types de fibres optiques classiquement utilisées; l'invention n'est pas limitée à ces valeurs de longueurs d'ondes, ni à ces types de fibres optiques.

L'effet Raman se produit dans toutes les fibres optiques et se manifeste par l'apparition de gain et de bruit à des longueurs d'onde supérieures à la longueur d'onde injectée.

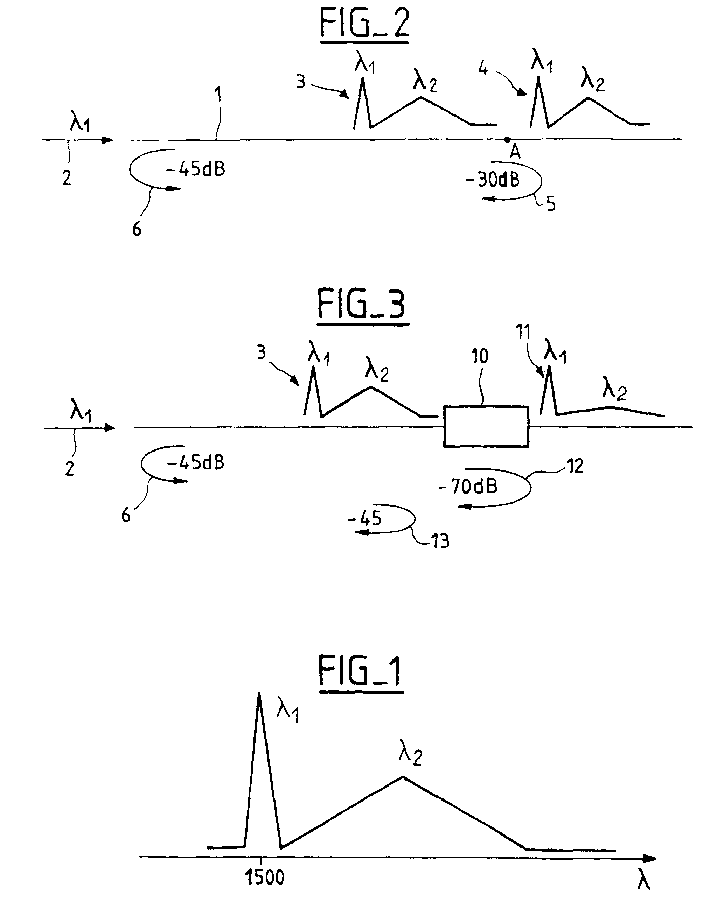

La figure 1 montre la forme spectrale approximée du bruit et du coefficient de gain Raman correspondant à une onde émise à la longueur d'onde λ1 dans la région de 1500 nm. La forme spectrale du coefficient de gain en fonction de la longueur d'onde est grossièrement un triangle avec, quand l'onde injectée est dans la région de 1500 nm. un maximum environ 100 nm plus haut en longueur d'onde. La région de longueur d'onde où se manifeste le gain Raman s'étend environ sur 200 nm à partir de l'onde injectée, avec un maximum de gain environ 100 nm plus haut, comme montré par la figure 1. On a porté sur la figure 1 en abscisses la longueur d'onde et en ordonnées la puissance. On trouve sur la figure 1 l'onde injectée. avec un pic autour de 1500 nm, et le gain Raman, qui présente une forme triangulaire, à des longueurs d'onde supérieures à celle de l'onde injectée.

Par exemple, dans le cas de l'injection dans une fibre standard d'une onde de pompe à 1480 nm avec une puissance supérieure à 1.3 W, l'effet Raman crée un fort gain dans la région de 1580 nm et des oscillations commencent à apparaître vers 1580 nm. Ce phénomène provoque des instabilités dans la puissance transmise à 1480 nm et plus la puissance augmente, plus l'énergie de l'onde à 1480 nm est transférée vers 1580 nm.

Dans le cas des fortes puissances de signal, la fibre utilisée est d'un autre type, pour éviter les conséquences de l'effet Kerr, et la limitation apparaît pour environ 1W de signal injecté. Cette fois, l'effet Raman crée du gain à 1650 nm et les oscillations laser créées à cène longueur d'onde provoquent des instabilités à 1550 nm et prennent l'énergie du signal à 1550 nm.

L'invention propose de repousser la limitation due à l'effet Raman, pour permettre l'injection de puissances supérieures dans la fibre, et augmenter ainsi la portée des liaisons. Pour cela, l'invention propose d'introduire dans la liaison des moyens d'atténuation dans la région de longueur d'onde où le signal émis crée du gain Raman. De tels moyens d'atténuation permettent d'une part d'éviter que les conditions d'oscillation dans la région de gain Raman ne soient satisfaites; d'autre part, les moyens d'atténuation limitent l'accumulation de bruit dans la région de gain Raman. De la sorte, on évite que le bruit accumulé ne s'amplifie au détriment du signal ou de la pompe à transmettre. Les caractéristiques ou les effets des moyens d'atténuation sont décrits plus en détail dans la suite.

Avantageusement, les moyens d'atténuation sont bidirectionnels dans la région de gain Raman. Ceci permet d'éviter la construction du bruit Raman dans les deux sens de propagation et d'atténuer les réflexions de type Rayleigh.

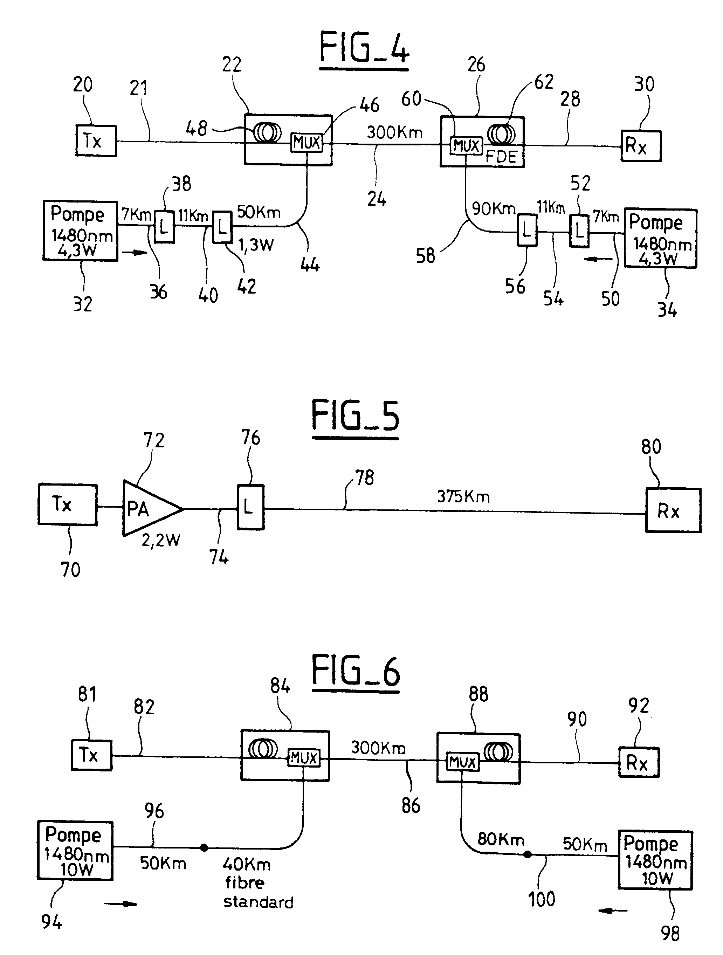

Plusieurs implémentations sont possibles: des solutions localisées qui consistent à ajouter des éléments dans la liaison. des solutions distribuées qui consistent à modifier la fibre de ligne, et des solutions mixtes appelées quasi-localisées. Les figures 2 à 5 montrent des solutions localisées; la figure 6 montre une solution distribuée.

Les figures 2 et 3 servent à illustrer les caractéristiques possibles des moyens d'atténuation selon l'invention. La figure 2 montre une liaison classique, avec les puissances des différents signaux; un signal à une longueur d'onde λ1, par exemple de 1480 nm est injecté dans une fibre de ligne 1, comme symbolisé par la flèche 2. La propagation du signal dans la fibre induit un gain Raman, autour d'une longueur d'onde λ2, dans ce cas 1580 nm, comme expliqué plus haut. On retrouve de part et d'autre d'un point A de la liaison des spectres 3 et 4 qui présentent l'allure de celui de la figure 1, comme représenté sur la figure 2. La flèche 5 symbolise les réflexions Rayleigh dans la fibre, qui se propagent dans une direction opposée à la propagation du signal à λ1, à une puissance de l'ordre de -30 dB par rapport au signal injecté. La flèche 6 symbolise les réflexions diverses. qui se propagent dans la même direction que le signal à λ1, à une puissance de l'ordre de -45 dB par rapport à celui-ci.

La figure 3 illustre une liaison pourvue de moyens d'atténuation selon l'invention. On a disposé, au point A dans la liaison de la figure 2, des moyens d'atténuation 10 localisés; des exemples de tels moyens sont décrits plus bas. Les moyens d'atténuation atténuent les signaux dans la région de longueur d'onde où le signal émis crée du gain Raman, i. e. dans l'exemple de la figure 2, autour de 1580 nm. Le spectre 3 en amont des moyens d'atténuation est identique à celui représenté sur la figure 2; en revanche, en aval des moyens de limitation, la puissance du signal dans la région de longueur d'onde autour de 1580 nm est atténuée: le spectre 11 en aval des moyens de limitation présente ainsi un pic de puissance à λ1 = 1480 nm et une puissance dans la région de longueur d'onde où le signal à λ1 créée du gain Raman qui est atténuée. Une valeur typique de l'atténuation induite par les moyens d'atténuation au voisinage de λ2 est de 20 dB. D'autres valeurs possibles apparaîtront à la lecture de la suite de la description.

Les moyens d'atténuation 10 atténuent aussi les réflexions Rayleigh; dans le cas d'atténuateurs bidirectionnels, pour la valeur de 20 dB d'atténuation à λ2, les réflexions Rayleigh présentent en aval des moyens de limitation une puissance de l'ordre de - 70 dB, comme indiqué sur la flèche 12 de la figure 3; par rapport à la valeur de -30 dB de la figure 2, cette valeur prend en compte l'atténuation induite par deux passages dans les moyens d'atténuation 11. Pour un atténuateur monodirectionnel, on aurait une puissance des réflexions Rayleigh de l'ordre de -50 dB.

Avantageusement, les moyens d'atténuation n'induisent que peu de réflexion; dans l'exemple de la figure 3, comme symbolisé par la flèche 13, les moyens d'atténuation n'induisent qu'une réflexion à -45 dB.

La présence des moyens d'atténuation 11 évite la construction du bruit Raman, limite les réflexions du type Rayleigh et permet globalement d'augmenter la puissance injectée et la portée de la liaison.

On détaille maintenant la natures des moyens d'atténuation qui peuvent être utilisés pour la mise en oeuvre de l'invention. Les moyens d'atténuation peuvent par exemple comprendre des filtres qui laissent passer le signal à transmettre mais rejettent les longueurs d'onde dans la région de gain Raman. Le filtrage peut être réalisé avec différentes technologies, par exemple coupleur de type fusion-étirage sélectif en longueur d'onde, filtrage par filtre de Bragg, par filtre diélectrique, filtrage de mode sélectif en longueur d'onde. Si les filtres choisis entraînent des réflexions dans la région de gain Raman, ils sont avantageusement combinés à des isolateurs optiques, de sorte à réduire les réflexions dans la région de longueur d'onde où le signal émis créée du gain Raman.

Ces moyens d'atténuation peuvent aussi être des sections de fibre optique dopée avec des éléments qui absorbent davantage dans la région de gain Raman qu'à la longueur d'onde à transmettre. Ces sections de fibre optique peuvent être dans des boîtes localisées ou être intégrées au câble (solution quasi-localisée). Ces sections de fibre spéciale peuvent par exemple être des sections de fibre optique dopée au dysprosium. En effet, cette terre rare a une absorption qui croit rapidement avec la longueur d'onde à partir d'environ 1480 nm. Elle peut donc être utilisée pour atténuer davantage dans la région de gain Raman qu'à la longueur d'onde transmise.

L'atténuation induite par les moyens d'atténuation pour la longueur d'onde où le signal émis crée un gain Raman maximal est de préférence supérieure ou égale à 10 dB. Dans l'exemple des figures 2 et 3. elle est de 20 dB; elle peut être encore supérieure.

Les moyens d'atténuation induisent une atténuation aussi faible que possible dans la région de longueur du signal émis. Dans l'exemple de la figure 4, cette atténuation est de 0.8 dB; elle est avantageusement inférieure à 0.2 dB.

La région dans laquelle les moyens d'atténuation atténuent le signal est de préférence aussi proche que possible de la longueur d'onde du signal émis; en effet, quand aucun moyen d'atténuation n'est mis en place, un effet d'oscillation apparaît au maximum de gain, i.e. pour λ2 avec les notations de la figure 3. Quand un moyen d'atténuation est mis en place, l'oscillation va apparaître pour des puissances émises plus importantes et à la longueur d'onde où la combinaison du gain Raman et de l'atténuation est la plus favorable pour le développement du gain Raman et du bruit. Ainsi, il est préférable que l'atténuation soit significative, non seulement pour la longueur d'onde pour laquelle le gain Raman créé est maximal en l'absence de moyens d'atténuation, mais dans la région de longueur d'onde autour de cette longueur d'onde. Par exemple, on peut définir une longueur d'onde λc de l'atténuateur, pour laquelle l'atténuation est 20 dB plus forte qu'à λ1. Plus cette longueur d'onde λc est proche de 11, plus la puissance maximale qui peut être émise est forte; avantageusement, λc vérifie λc ≤ λ1 + 10 nm. En fait, l'atténuation est avantageusement significative aussi près que possible de la longueur d'onde à transporter.

On précise maintenant le positionnement possible des moyens d'atténuation. Dans le cas de solutions localisées, les moyens d'atténuation dans la région de gain Raman peuvent être disposés de façon localisée près des extrémités de la liaison, où de fortes puissances se propagent. Une règle possible pour disposer les moyens d'atténuation est la suivante. Des moyens d'atténuation peuvent être insérés quand le gain Raman cumulé depuis le début de la liaison ou depuis les moyens d'atténuation précédent est supérieur à une valeur limite de gain. Une section de fibre optique entre le début de la liaison et les premiers moyens d'atténuation ou entre deux moyens d'atténuation adjacents est appelée section élémentaire Raman. La limite de gain dépend des réflexions de part et d'autre de la section élémentaire Raman. Si une valeur de -45 dB pour les réflexions est réalisée, une valeur limite de 40 dB pour le gain Raman dans une section élémentaire peut être considérée, ce qui assure 5 dB de marge. La valeur limite en cause peut être une valeur absolue - par exemple 40 dB - ou une valeur relative - par exemple 5 dB au dessus de la valeur des réflexions.

En fait, dans une telle disposition, des moyens d'atténuation sont placés de sorte que, sans ces moyens, le gain créé par l'effet Raman, combiné avec les réflexions dans le système, incluant les réflexions de type Rayleigh, entraînerait des instabilités de puissance et le transfert de l'énergie de l'onde à transmettre vers la région de gain Raman.

La figure 4 montre un exemple de liaison selon l'invention, avec des moyens d'atténuation localisés. qui permettent d'augmenter la puissance du signal de pompe. La liaison de la figure 4 comprend un émetteur 20, qui émet dans une fibre de ligne 21 un signal à une longueur d'onde voisine de 1480 nm. L'extrémité de la fibre de ligne, après une propagation sur 68 km, est reliée à un premier amplificateur déporté 22. Le signal issu de l'amplificateur déporté se propage sur 300 km de fibre de ligne 24, et arrive à un deuxième amplificateur déporté 26; il est ensuite transmis sur une fibre de ligne 28 au récepteur 30. sur une longueur de 108 km. Les distances considérées dans ces exemples sont des distances qui pourraient être utilisés pour des systèmes installés commercialement. Pour des systèmes de démonstration en laboratoire, des distances supérieures pourraient être installées.

Dans cet exemple, la puissance de pompe est injectée depuis le terminal d'émission et depuis le terminal de réception, à partir de générateurs de pompe 32 et 34. côté émission et réception, qui émettent des signaux optiques continus à une puissance de 4,3 W. Les fibres qui transportent la pompe sont différentes de celle qui transportent le signal afin que la perte des limiteurs n'affecte pas le signal. Deux sections élémentaires Raman sont considérées et deux limiteurs Raman sont utilisés à chaque extrémité de la liaison. Ainsi, le générateur 32 côté émission émet le signal de pompe dans une première section de fibre 36. d'une longueur de 7 km; cette première section est relié à des moyens d'atténuation 38: le signal de pompe atténué est transmis sur une deuxième section de fibre 40 d'une longueur de 11 km, et est transmis à des seconds moyens d'atténuation 42. Le signal de pompe est ensuite transmis par une troisième section de fibre 44 d'une longueur de 50 km au premier amplificateur déporté 22. Dans cet amplificateur, le signal de pompe et le signal à transporter sont multiplexés dans un multiplexeur 46 et le signal de pompe est utilisé pour amplifier le signal à transporter dans une section 48 de fibre dopée à l'erbium. Le montage côté réception est sensiblement identique: générateur 34, première section de fibre 50 d'une longueur de 7 km; moyens d'atténuation 52: deuxième section de fibre 54 d'une longueur de Il km; seconds moyens d'atténuation 56; troisième section de fibre 58 d'une longueur de 90 km, second amplificateur déporté 24. L'amplificateur déporté 24 comprend un multiplexeur 60 et une section 62 de fibre dopée à l'erbium.

Dans le montage de la figure 4, les moyens d'atténuation Raman atténuent de 0.8 dB à 1480 nm, de plus de 20 dB aux longueurs d'onde supérieures à 1490 nm et créent des réflexions à moins de -45 dB. Dans ces conditions, la longueur des sections élémentaires est calculée pour que le gain Raman qui se construit dans une section ne dépasse pas 40 dB. La section élémentaire proche du terminal d'émission est la plus courte puisque la puissance de pompe y est la plus élevée. La puissance injectée dans la ligne à partir des seconds moyens d'atténuation est de 1.3 W, ce qui est le maximum injectable sans risque d'oscillation en l'absence de moyens d'atténuation. De plus. avec cette puissance, la conversion de pompe à 1480 nm en bruit à 1580 nm reste faible (20 dB d'écart).

Utiliser de plus fortes puissances et des troisièmes moyens d'atténuation Raman apporterait un gain en distance de seulement quelques km et n'est pas considéré dans cet exemple. Au total, avec deux moyens d'atténuation selon l'invention à chaque extrémité de la liaison, le gain en distance est de 18 km à chaque extrémité, soit 36 km au total.

La figure 5 montre un autre exemple de liaison selon l'invention, avec des moyens d'atténuation localisés pour permettre la propagation d'une très forte puissance de signal à 1550 nm. La liaison de la figure 5 comprend un émetteur 70, un postamplificateur 72, une section de fibre 74 de 11 km, des moyens de limitation 76, une fibre de ligne 78 de 375 km et un récepteur 80. Dans l'exemple, les moyens d'atténuation ont une perte de 0.8 dB à 1550 nm et atténuent de plus de 20 dB aux longueurs d'onde supérieures à 1560 nm. Dans ce cas de la figure 5, les moyens d'atténuation sont placés sur la fibre qui porte le signal à transmettre et donc la perte des moyens d'atténuation pour la longueur d'onde du signal à transmettre doit être décomptée de l'augmentation de distance. Pour cette raison, des moyens d'atténuation ne font gagner que 7 km de distance (11 km comme sur la figure 4, moins 4 km correspondant à la perte des moyens d'atténuation à la longueur d'onde du signal à transmettre) et des seconds moyens d'atténuation Raman, qui ne feraient gagner que 2 km supplémentaire, ne sont pas considéré dans cet exemple.

L'invention permet ainsi, par l'utilisation de moyens d'atténuation simple sur la fibre de ligne ou sur la fibre de pompage. d'augmenter la puissance injectée, et la portée de la liaison.

La figure 6 montre une liaison selon l'invention, avec des moyens d'atténuation distribués disposés sur la fibre de ligne. Une telle solution distribuée consiste à utiliser une fibre optique qui atténue davantage dans la région de gain Raman qu'à la longueur d'onde à transmettre. Ainsi, cette fibre empêche intrinsèquement la construction du bruit Raman et présente aussi de très faibles réflexions Rayleigh dans la région de gain Raman. Cette atténuation différentielle peut être obtenue en dopant la fibre de ligne avec un matériau absorbant davantage dans la région de gain Raman qu'à la longueur d'onde à transmettre. Dans l'exemple de la figure 6, on utilise une telle fibre spéciale pour transporter le signal de pompe vers les amplificateurs déportés.

La structure de la liaison de la figure 6 est analogue à celle de la figure 4. La liaison de la figure 6 comprend un émetteur 81, qui émet dans une fibre standard 82 un signal à une longueur d'onde voisine de 1480 nm. L'extrémité de la fibre 82, après une propagation sur 90 km, est reliée à un premier amplificateur déporté 84. Le signal issu de l'amplificateur déporté se propage sur 300 km de fibre standard 86, et arrive à un deuxième amplificateur déporté 88; il est ensuite transmis sur une fibre standard 90 jusqu'au récepteur 92, sur une longueur de 130 km.

Le signal de pompe est injecté côté émission par un générateur de pompe 94. vers une section de fibre dopée 96 d'une longueur de 50 km, qui forme des premiers moyens d'atténuation distribués. L'extrémité de la section de fibre 96 est reliée à une fibre standard de 30 km, elle même reliée au premier amplificateur déporté. Celui-ci présente une structure analogue à l'amplificateur déporté de la figure 4 et n'est pas décrit plus en détail. Côté réception, la structure est similaire: générateur de pompe 98. section de fibre dopée 100 d'une longueur de 50 km, fibre standard d'une longueur de 80 km, dont l'extrémité est reliée au second amplificateur déporté 88.

Dans cet exemple. une fibre dopée au dysprosium est utilisée pour transporter le signal de pompe dans les premières dizaines de km, où le signal à transmettre est puissant. Le dysprosium Dy³⁺ absorbe peu à 1480 nm - longueur d'onde du signal de pompe - mais absorbe fortement les longueurs d'onde plus élevées, notamment à 1580 nm. Comme la concentration nécessaire en dysprosium est faible. l'atténuation à 1480 nm peut ne pas être significativement augmentée par l'addition de dysprosium. Ainsi, si l'atténuation à 1480 nm reste égale à 0.21 dB/km comme pour une fibre standard, mais passe à 0.3 dB/km à 1530 nm et à 1 dB/km au pic de gain Raman à 1580 nm, la puissance de pompe maximale injectable passe de 1.3 W à environ 10 W, ce qui représente un gain en distance d'environ 40 km à chaque extrémité, soit 80 km au total. Cette fois, la limitation n'est plus due à une oscillation à 1580 nm, mais à une oscillation à 1530 nm, où la combinaison du gain Raman et de l'atténuation est la plus favorable au développement du gain Raman et du bruit. On utilise typiquement du dysprosium ou une autre terre rare telle que du terbium, en une concentration supérieures à 0,01 ppm. Une telle concentration est suffisante pour assurer une atténuation du signal à la longueur d'onde où le signal émis créée du gain Raman qui soit au moins deux fois supérieure à l'atténuation à la longueur d'onde du signal émis.

La solution de la figure 6 est un exemple de moyens d'atténuation distribués. La longueur de fibre dopée est suffisante pour qu'en sortie de la section de fibre dopée, la puissance soit inférieure à 1,3 W, puissance qui peut être injectée dans la fibre standard.

On pourrait aussi appliquer à l'exemple de la figure 4 des moyens d'atténuation distribuée, comme ceux de la figure 6. On pourrait encore utiliser pour les moyens d'atténuation de la figure 4 ou de la figure 5 des sections de fibre dopée, comme dans le cas de la figure 6. Dans le cas d'une solution localisée ou quasi-localisée, on peut prévoir un ou plusieurs moyens d'atténuation, dont la longueur totale est de préférence inférieure à 10% de la longueur totale de la liaison. La longueur totale de la liaison est définie comme étant la longueur totale du câble constitué du câble lui-même et des boîtes de raccordement: dans le cas d'une solution distribuée, la longueur des sections de fibre atténuant le signal peut aller de 10% à 100% de la longueur de la liaison. Les distances utilisées dans les exemples des figures 4, 5 et 6 sont des distances correspondant à des systèmes qui pourraient être installés. Des systèmes plus longs pourraient être envisagés dans le cadre de démonstrations de laboratoire.

## Revendications

1. Liaison par fibre optique, caractérisée par des moyens d'atténuation (38, 42, 52, 56, 76, 96, 100) dans la région de longueur d'onde où le signal émis crée du gain Raman

2. Liaison selon la revendication 1, caractérisée en ce que les moyens d'atténuation sont bidirectionnels.

3. Liaison selon la revendication 1 ou 2, caractérisée en ce que les moyens d'atténuation atténuent en outre les réflexions Rayleigh dans la région de longueur d'onde où le signal émis créée du gain Raman.

4. Liaison selon la revendication 1, 2 ou 3. caractérisée en ce que les moyens d'atténuation induisent dans la liaison des réflexions à un niveau inférieur à -20 dB, de préférence inférieur à -40 dB à la longueur d'onde de maximum de gain Raman.

5. Liaison selon l'une des revendications 1 à 4, caractérisée en ce que les moyens d'atténuation atténuent d'au moins 10 dB à la longueur d'onde de maximum de gain Raman.

6. Liaison selon l'une des revendications 1 à 5. caractérisée en ce que les moyens d'atténuation atténuent dans la région de longueur d'onde du signal émis à un niveau inférieur à 1 dB.

7. Liaison selon l'une des revendications là 6, caractérisée en ce que les moyens d'atténuation comprennent un ou plusieurs des éléments suivants: des sections de fibre optique (96, 100) dopées avec des matériaux absorbant davantage dans la région de longueur d'onde où le signal émis créée du gain Raman que dans la région de la longueur d'onde à transmettre; des filtres atténuant dans la région de longueur d'onde où le signal émis créée du gain Raman: des isolateurs optiques.

8. Liaison selon la revendication 7. caractérisée en ce que lesdits matériaux comprennent des terres rares telles le terbium ou le dysprosium.

9. Liaison selon la revendication 8. caractérisée en ce que la concentration en terre rare dans la section de fibre est supérieure à 0,01 ppm.

10. Liaison selon la revendication 7, 8 ou 9, caractérisée en ce que l'atténuation par unité de longueur dans les dites sections de fibre à la longueur d'onde où le signal émis créée du gain Raman est au moins deux fois supérieure à l'atténuation à la longueur d'onde du signal émis.

11. Liaison selon l'une des revendications 1 à 10, caractérisée par des moyens d'atténuation localisé en au moins un point de la liaison, la longueur totale des moyens d'atténuation étant inférieure à 10% de la longueur totale de la liaison.

12. Liaison selon l'une des revendications 1 à 10, caractérisé par des moyens d'atténuation distribués dans la liaison, la longueur totale des moyens d'atténuation étant comprise entre 10 et 100% de la longueur totale de la liaison.

13. Liaison selon l'une des revendications 1 à 12, caractérisée en ce que les moyens d'atténuation dans la région de gain Raman sont placés à des endroits de la liaison tels qu'un tout point de la liaison, la valeur de gain Raman cumulé depuis l'extrémité de la liaison ou depuis d'autres moyens d'atténuation est inférieure à une valeur limite.

14. Liaison selon la revendication 13, caractérisé en ce que la valeur limite est fonction des réflexions dans la liaison.

15. Liaison selon l'une des revendications 1 à 14, caractérisée en ce que des moyens d'atténuation dans la région de gain Raman sont utilisés pour transmettre de fortes puissances d'onde de signal de transmission dans la gamme de longueur d'onde 1520-1580 nm ou d'onde de pompe dans la gamme de longueur d'onde 1400-1500 nm.

16. Liaison selon l'une des revendications 1 à 15, caractérisée en ce qu'elle comprend une pluralité de moyens d'atténuations.

17. Système de transmission, comprenant au moins une liaison selon l'une des revendications 1 à 16.

18. Procédé de transmission de signal optique à forte puissance dans une liaison par fibre optique, caractérisé par au moins une étape d'atténuation dans la région de longueur d'onde où le signal émis crée du gain Raman

19. Procédé selon la revendication 18, caractérisé en ce que l'étape d'atténuation comprend une atténuation dans les deux sens de propagation sur la liaison.

20. Procédé selon la revendication 18 ou 19, caractérisé en outre par une étape d'atténuation des réflexions Rayleigh dans la région de longueur d'onde où le signal émis créée du gain Raman.

21. Procédé selon la revendication 18, 19 ou 20, caractérisé en ce que l'étape d'atténuation comprend une atténuation d'au moins 10 dB à la longueur d'onde de maximum de gain Raman.

22. Procédé selon l'une des revendications 19 à 21, caractérisé en ce que l'étape d'atténuation induit dans la région de longueur d'onde du signal émis une atténuation d'un niveau inférieur à 1 dB.

23. Procédé selon l'une des revendications 19 à 22, caractérisée en ce que l'étape d'atténuation comprend une ou plusieurs des étapes suivants: propagation à travers des sections de fibre optique dopées avec des matériaux absorbant davantage dans la région de longueur d'onde où le signal émis créée du gain Raman que dans la région de la longueur d'onde à transmettre; filtrage à l'aide de filtres atténuant dans la région de longueur d'onde où le signal émis créée du gain Raman: réflexion par des isolateurs optiques.

24. Procédé selon la revendication 23, caractérisé en ce que lesdits matériaux comprennent des terres rares telles le terbium ou le dysprosium.

25. Procédé selon la revendication 24, caractérisé en ce que la concentration en terre rare dans la section de fibre est supérieure à 0.01 ppm.

26. Procédé selon la revendication 23, 24 ou 25. caractérisé en ce que l'atténuation par unité de longueur dans les dites sections de fibre à la longueur d'onde où le signal émis créée du gain Raman est au moins deux fois supérieure à l'atténuation à la longueur d'onde du signal émis.

27. Procédé selon l'une des revendications 18 à 26, caractérisé en ce que l'étape d'atténuation s'effectue de manière localisée en au moins un point de la liaison.

28. Procédé selon l'une des revendications 18 à 26, caractérisé en ce que l'étape d'atténuation s'effectue de manière distribuée le long de la liaison, sur une longueur comprise entre 10 et 100% de la longueur totale de la liaison.

29. Procédé selon l'une des revendications 18 à 28, caractérisé en ce que l'étape d'atténuation est mise en oeuvre dans la liaison de sorte qu'en tout point de la liaison, la valeur de gain Raman cumulé est inférieure à une valeur limite.

30. Procédé selon la revendication 29, caractérisé en ce que la valeur limite est fonction des réflexions dans la liaison.

31. Procédé selon l'une des revendications 18 à 30. caractérisé en ce qu'il comprend une pluralité d'étapes d'atténuations.

## Patentansprüche

1. Faseroptische Verbindung, gekennzeichnet durch Dämpfungsmittel (38, 42, 52, 56, 76, 96, 100) in dem Wellenlängenbereich, wo das gesendete Signal Ramanverstärkung schafft.

2. Verbindung nach Anspruch 1, dadurch gekennzeichnet, dass die Dämpfungsmittel bidirektional sind.

3. Verbindung nach Anspruch 1 oder 2, dadurch gekennzeichnet, dass die Dämpfungsmittel außerdem die Rayleigh-Reflexionen in dem Wellenlängenbereich dämpfen, wo das gesendete Signal Ramanverstärkung schafft.

4. Verbindung nach Anspruch 1, 2 oder 3, dadurch gekennzeichnet, dass die Dämpfungsmittel in der Verbindung Reflexionen mit einem Pegel unterhalb von - 20 dB, vorzugsweise unterhalb von -40dB bei der Wellenlänge mit der maximalen Ramanverstärkung induzieren.

5. Verbindung nach einem der Ansprüche 1 bis 4, dadurch gekennzeichnet, dass die Dämpfungsmittel um wenigstens 10 dB bei der Wellenlänge mit der maximalen Ramanverstärkung dämpfen.

6. Verbindung nach einem der Ansprüche 1 bis 5, dadurch gekennzeichnet, dass die Dämpfungsmittel in dem Wellenlängenbereich des gesendeten Signals mit einem Pegel unterhalb von 1 dB dämpfen.

7. Verbindung nach einem der Ansprüche 1 bis 6, dadurch charakterisiert, dass die Dämpfungsmittel ein oder mehrere der folgenden Elemente umfassen: optische Faserabschnitte (96, 100), die mit Materialien dotiert sind, die stärker in dem Wellenlängenbereich absorbieren, wo das gesendete Signal Ramanverstärkung schafft, als in dem zu übertragenden Wellenlängenbereich; Filter, die in dem Wellenlängenbereich dämpfen, wo das gesendete Signal Ramanverstärkung schafft; optische Isolatoren.

8. Verbindung nach Anspruch 7, dadurch gekennzeichnet, dass die Materialien seltene Erden wie zum Beispiel Terbium oder Dysprosium umfassen.

9. Verbindung nach Anspruch 8, dadurch gekennzeichnet, dass die Konzentration an seltener Erde im Faserabschnitt über 0,01 ppm liegt.

10. Verbindung nach Anspruch 7, 8 oder 9 dadurch gekennzeichnet, dass die Dämpfung pro Längeneinheit in den besagten Faserabschnitten bei einer Wellenlänge, wo das gesendete Signal Ramanverstärkung schafft, wenigstens zweimal höher als die Dämpfung bei der Wellenlänge des gesendeten Signals ist.

11. Verbindung nach einem der Ansprüche 1 bis 10, gekennzeichnet durch Dämpfungsmittel, die an wenigstens einem Punkt der Verbindung lokalisiert sind, wobei die Gesamtlänge der Dämpfungsmittel weniger als 10% der Gesamtlänge der Verbindung beträgt.

12. Verbindung nach einem der Ansprüche 1 bis 10, gekennzeichnet durch Dämpfungsmittel, die in der Verbindung verteilt sind, wobei die Gesamtlänge der Dämpfungsmittel zwischen 10 und 100% der Gesamtlänge der Verbindung beträgt.

13. Verbindung nach einem der Ansprüche 1 bis 12, dadurch gekennzeichnet, dass die Dämpfungsmittel für den Bereich der Ramanverstärkung an Stellen der Verbindung so angeordnet sind, dass an jedem Punkt der Verbindung der Wert der von dem Ende der Verbindung oder von anderen Dämpfungsmitteln an kumulierten Ramanverstärkung unterhalb eines Schwellwertes liegt.

14. Verbindung nach Anspruch 13, dadurch gekennzeichnet, dass der Schwellwert eine Funktion der Reflexionen in der Verbindung ist.

15. Verbindung nach einem der Ansprüche 1 bis 14, dadurch gekennzeichnet, dass Dämpfungsmittel in dem Bereich der Ramanverstärkung dazu verwendet werden, hohe Leistungen der Übertragungssignalwelle im Wellenlängenbereich von 1520 - 1580 nm oder der Pumpwelle im Wellenlängenbereich von 1400 - 1500 nm zu übertragen.

16. Verbindung nach einem der Ansprüche 1 bis 15, dadurch gekennzeichnet, dass sie eine Mehrzahl von Dämpfungsmitteln umfasst.

17. Übertragungssystem, das wenigstens eine Verbindung gemäß einem der Ansprüche 1 bis 16 umfasst.

18. Verfahren zur Übertragung eines optischen Signals mit hoher Leistung in einer faseroptischen Verbindung, gekennzeichnet durch wenigstens einen Dämpfungsschritt in dem Wellenlängenbereich, wo das gesendete Signal Ramanverstärkung schafft.

19. Verfahren nach Anspruch 18, dadurch gekennzeichnet, dass der Dämpfungsschritt eine Dämpfung in den zwei Ausbreitungsrichtungen auf der Verbindung umfasst.

20. Verfahren nach Anspruch 18 oder 19, gekennzeichnet außerdem durch einen Dämpfungsschritt der Rayleigh-Reflexionen in dem Wellenlängenbereich, wo das gesendete Signal Ramanverstärkung schafft.

21. Verfahren nach Anspruch 18, 19 oder 20, dadurch gekennzeichnet, dass der Dämpfungsschritt eine Dämpfung von wenigstens 10 dB bei der Wellenlänge der maximalen Ramanverstärkung umfasst.

22. Verfahren nach einem der Ansprüche 19 bis 21, dadurch gekennzeichnet, dass der Dämpfungsschritt in dem Wellenlängenbereich des gesendeten Signals eine Dämpfung mit einem Pegel unterhalb von 1 dB induziert.

23. Verfahren nach einem der Ansprüche 19 bis 22, dadurch gekennzeichnet, dass ein Dämpfungsschritt einen oder mehrere der folgenden Schritte umfasst: Ausbreitung über optische Faserabschnitte, die mit Materialien dotiert sind, die in dem Wellenlängenbereich, wo das gesendete Signal Ramanverstärkung schafft, stärker absorbieren als in dem zu übertragenden Wellenlängenbereich; Filterung mit Hilfe von Filtern, die in dem Wellenlängenbereich dämpfen, wo das gesendete Signal Ramanverstärkung schafft; Reflexion durch optische Isolatoren.

24. Verfahren nach Anspruch 23, dadurch gekennzeichnet, dass die Materialien seltene Erden wie zum Beispiel Terbium oder Dysprosium umfassen.

25. Verfahren nach Anspruch 24, dadurch gekennzeichnet, dass die Konzentration an seltenen Erden im Faserabschnitt höher als 0,0lppm ist.

26. Verfahren nach Anspruch 23, 24 oder 25, dadurch gekennzeichnet, dass die Dämpfung pro Längeneinheit in den Faserabschnitten bei der Wellenlänge, wo das gesendete Signal Ramanverstärkung schafft, wenigstens zweimal stärker ist als die Dämpfung bei der Wellenlänge des gesendeten Signals.

27. Verfahren nach einem der Ansprüche 18 bis 26, dadurch gekennzeichnet, dass der Dämpfungsschritt lokalisiert an wenigstens einem Punkt der Verbindung erfolgt.

28. Verfahren nach einem der Ansprüche 18 bis 26, dadurch gekennzeichnet, das der Dämpfungsschritt entlang der Verbindung über eine Länge verteilt erfolgt, die zwischen 10 bis 100% der Gesamtlänge der Verbindung liegt.

29. Verfahren nach einem der Ansprüche 18 bis 28, dadurch gekennzeichnet, dass der Dämpfungsschritt in der Verbindung so erfolgt, dass an jedem Punkt der Verbindung der Wert der kumulierten Ramanverstärkung unterhalb eines Schwellwertes liegt.

30. Verfahren nach Anspruch 29, dadurch gekennzeichnet, das der Schwellwert eine Funktion der Reflexionen in der Verbindung ist.

31. Verfahren nach einem der Ansprüche 18 bis 30, dadurch gekennzeichnet, dass es eine Mehrzahl von Dämpfungsschritten umfasst.

## Claims

1. A fibre optic link including attenuator means (38, 42, 52, 56, 76, 96, 100) in the wavelength region in which the sent signal creates the Raman gain.

2. A link according to claim 1, characterised in that the attenuator means are bidirectional.

3. A link according to claim 1 or 2, characterised in that the attenuator means also attenuate Rayleigh reflections in the wavelength region in which the sent signal creates the Raman gain.

4. A link according to claim 1, 2 or 3, characterised in that the attenuator means induce reflections in the link at a level less than -20 dB, preferably less than -40 dB, at a maximum Raman gain wavelength.

5. A link according to any one of claims 1 to 4, characterised in that the attenuator means attenuate by at least 10 dB at the maximum Raman gain wavelength.

6. A link according to any one of claims 1 to 5, characterised in that the attenuator means attenuate in the wavelength region of the sent signal at a level less than 1 dB.

7. A link according to any one of claims 1 to 6, characterised in that the attenuator means comprise one or more of the following: optical fibre sections (96, 100) doped with materials absorbing more in the wavelength region in which the sent signal creates the Raman gain than in the region of the wavelength to be transmitted; filters attenuating in the wavelength region in which the sent signal creates the Raman gain; optical isolators.

8. A link according to claim 7, characterised in that the materials comprise rare earths such as terbium or dysprosium.

9. A link according to claim 8, characterised in that the rare earth concentration in the fibre section is greater than 0.01 ppm.

10. A link according to claim 7, 8 or 9, characterised in that the attenuation per unit length in said fibre sections at the wavelength at which the sent signal creates the Raman gain is at least twice the attenuation at the wavelength of the sent signal.

11. A link according to any one of claims 1 to 10 including attenuator means localised at at least one point of the link, the total length of the attenuator means being less than 10% of the total length of the link.

12. A link according to any one of claims 1 to 10 including distributed attenuator means in the link, the total length of the attenuator means being in the range 10% to 100% of the total length of the link.

13. A link according to any one of claims 1 to 12, characterised in that the attenuator means in the Raman gain region are placed at locations of the link such that at any point of the link the cumulative Raman gain value from the end of the link or from other attenuator means is less than a limit value.

14. A link according to claim 13, characterised in that the limit value depends on reflections in the link.

15. A link according to any one of claims 1 to 14, characterised in that attenuator means in the Raman gain region are used to transmit high transmission signal wave powers in the wavelength range 1 520 nm to 1 580 nm or high pump wave powers in the wavelength range 1 400 nm to 1 500 nm.

16. A link according to any one of claims 1 to 15, characterised in that it comprises a plurality of attenuator means.

17. A transmission system comprising at least one link according to any one of claims 1 to 16.

18. A method of transmitting high-power optical signals in a fibre optic link including at least one step of attenuation in the wavelength region in which the sent signal creates the Raman gain.

19. A method according to claim 18, characterised in that the attenuation step comprises attenuation in both propagation directions on the link.

20. A method according to claim 18 or 19 further including a step of attenuating Rayleigh reflections in the wavelength region in which the sent signal creates the Raman gain.

21. A method according to claim 18, 19 or 20, characterised in that the attenuation step comprises attenuation of at least 10 dB at the maximum Raman gain wavelength.

22. A method according to any one of claims 19 to 21, characterised in that the attenuation step induces in the wavelength region of the sent signal attenuation at a level less than 1 dB.

23. A method according to any one of claims 19 to 22, characterised in that the attenuation step comprises one or more of the following steps: propagation through optical fibre sections doped with materials absorbing more in the wavelength region in which the sent signal creates the Raman gain than in the region of the wavelength to be transmitted; filtering using filters attenuating in the wavelength region in which the sent signal creates the Raman gain; reflection by optical isolators.

24. A method according to claim 23, characterised in that the materials comprise rare earths such as terbium or dysprosium.

25. A method according to claim 24, characterised in that the rare earth concentration in the fibre section is greater than 0.01 ppm.

26. A method according to claim 23, 24 or 25, characterised in that the attenuation per unit length in said fibre sections at the wavelength at which the sent signal creates the Raman gain is at least twice the attenuation at the wavelength of the sent signal.

27. A method according to any one of claims 18 to 26, characterised in that the attenuation step is effected in a localised manner at at least one point of the link.

28. A method according to any one of claims 18 to 26, characterised in that the attenuation step is effected in a distributed manner along the link over a length in the range 10% to 100% of the total length of the link.

29. A method according to any one of claims 18 to 28, characterised in that the attenuation step is effected in the link so that at any point of the link the cumulative Raman gain value is less than a limit value.

30. A method according to claim 29, characterised in that the limit value depends on reflections in the link.

31. A method according to any one of claims 18 to 30, characterised in that it comprises a plurality of attenuation steps.
